# EUROPEAN PATENT SPECIFICATION

(11) **EP 0 331 151 B1**
(45) Date of publication and mention of the grant of the patent: **08.09.1993**
(21) Application number: 89103595.8
(22) Date of filing: 01.03.1989
(51) Int. Cl.: G03G 15/04, G03B 27/52

(54) **Scanning-member-stop positioning device for the image forming apparatus**
Vorrichtung zum Halten des Abtastelementes in einer bestimmten Position für ein Bilderzeugungsgerät
Dispositif pour arrêter à une position précise l'élément de balayage d'un appareil de formation d'images

(30) Priority: 01.03.1988 JP 49114/88
(43) Date of publication of application: 06.09.1989
(73) Proprietor: MITA INDUSTRIAL CO., LTD., Osaka 540 (JP)
(72) Inventor: Yamada, Syuji, Kobe-shi Hyogo 653 (JP); Andou, Hironori, Osaka-shi Osaka 543 (JP)
(74) Representative: Schwan, Gerhard, Dipl.-Ing.

(56) References cited:
- PATENT ABSTRACTS OF JAPAN, vol. 11, no. 350 (P-637)[2797], 17th November 1987; & JP-A-62 129 837 (MITA IND. CO., LTD) 12-06-1987
- PATENT ABSTRACTS OF JAPAN, vol. 9, no. 195 (P-379)[1918], 13th August 1985; & JP-A-60 060 636 (KONISHIROKU SHASHIN KOGYO K.K.) 08-04-1985
- PATENT ABSTRACTS OF JAPAN, vol. 8, no. 92 (P-271)[1529], 27th April 1984; & JP-A-59 007 355 (RICOH K.K.) 14-01-1984

## Description

### BACKGROUND OF THE INVENTION

The present invention relates to a scanning-member-stop positioning device, controlling the braking action applied upon a scanning member consisting of an optical section or a document glass plate so as to stop it exactly at a home position, for an image forming apparatus like a copying machine, a document reader, or the like.

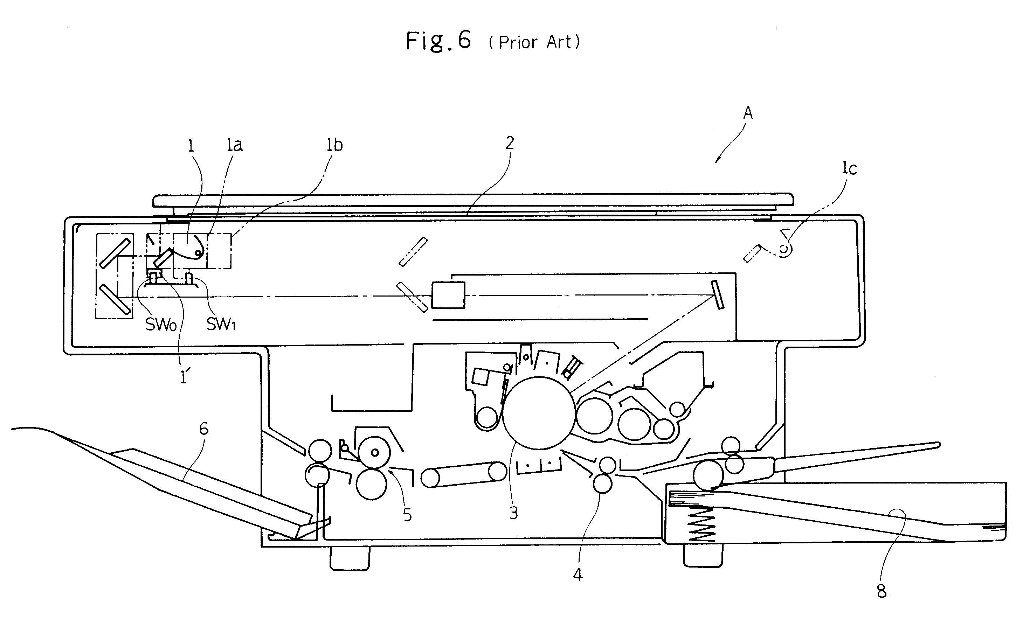

A copying machine A is illustrated in Fig. 6 as an example of the background of the invention. Copying machine A scans a paper disposed on a document glass plate 2 with the exposure being effected by movement of an optical section 1 comprising a light source etc. to the right and left. Such an exposure scanning likewise can be done by movement of the document glass plate 2 while the optical section 1 is stationary. Accordingly, generally the optical section 1 or the document glass plate 2 will be called "a scanning member" in the present invention.

The copying machine A shown in Fig. 6 is of a type having a movable optical section 1 waiting before a copying operation at the left end in the figure, namely the home position denoted by reference sign 1a in Fig. 6.

When a print key is pushed at the time of the copying operation, the optical section 1 will start moving in the right direction in Fig. 6. When the optical section 1 passes over a read starting position 1b illustrated by a dotted line, a detect piece 1' installed in the optical section 1 actuates a read starting positional sensor SW₁. The signal from sensor SW₁ determines the start timing of rotating a resisting roller 4 which conveys a paper 8 to a photoreceptor drum 3. The optical section 1, which passes over the read starting position 1b, moves up to a position (the maximum movement up to a position 1c) in proportion to the document sizes to be scanned. After that, the optical section 1 is moved back to the home position 1a. Then the optical section 1 goes back and forth between the home position 1a and the end position at the right end in Fig. 6 (such as a position 1c) for a number of times equal to the number of copies to be made so as to scan the document with the exposure. A toner image is formed on the surface of the photoreceiptor drum 3, is transferred to the paper 8 sent out by the resisting roller 4, and is fixed by a fixing roller 5. After that, the paper 8 is conveyed out onto a copy tray 6.

The scanning member consisting of the above-mentioned optical section 1 or the document glass plate 2 in itself comprises some heavy parts such as the light source and its frame. Therefore the durability of the scanning member and of the casing main body of the copying machine is deteriorated by a gross load originating from a sudden stop of the scanning member at the home position 1a. For the purpose of copying with the foregoing, the stop shock of the back-running scanning member generally is relieved by a stepwise brake operation, wherein the scanning member is decelerated at the time of passage over the read starting position 1b, and is further braked more powerfully for being stopped at the home position 1a (JP-A-62 129 837 and JP-A-60 062 776).

Stopping of the scanning member by a stepwise brake operation is superior to suddenly stopping with regard to relieving the shock. It is commonly known that the required braking action should change as a function of the frictional resistance arising from movement of the scanning member, the environment conditions, such as the room temperature, the historical factor and so on. However, in the prior art the adjustment of the braking action is not very precise.

### SUMMARY OF THE INVENTION

It is the object of the present invention to execute a precise braking control in which a suitable braking action is determined by the actual run to stop the scanning member just at the home position 1a.

In conformity with the present invention a scanning member-stop positioning device for an image forming apparatus wherein a document in contact with a document glass plate is exposed due to the movement of a scanning member consisting of an optical section or of the document glass plate, comprising
means for driving the scanning member to run back toward a home position at a fixed velocity; and
means for braking the scanning member during its return movement, wherein braking begins at the time of the scanning member passing over a fixed position;
is characterized by
means for changing the braking action defined as braking time and/or braking torque, applied by sais braking means; and
means for determining the braking action adapted to bring the scanning member to a stop at said home position, based on the distances of movement of the scanning member from said fixed position toward said home position resulting from the changes of the braking action applied to the scanning member, said changes being due to said means for changing the braking action.

The meaning of the term "braking action" as herein used should include the braking time and the braking torque in inverted rotation braking, and the magnitude of the braking torque in frictional braking.

In the present scanning-member-stop positioning device, the scanning member consisting of the optical section or of the document glass plate is driven back toward the home positon at the appointed velocity by means for driving the scanning member. The scanning member under return will be braked by the braking means at the time of passage over an appointed position, for example, the read starting position. The stop position of the scanning member will change according to the braking action at said time.

On the way of back-running actuation, the process sequence which includes the stopping state via the braking actuation as described above should be repeated twice at least. During said repetition, a means for changing the braking action changes the stop position of the scanning member, i.e. the distance by which the scanning member is moved before coming to a stop. Further, the braking action adapted to bring the scanning member to a stop at the home position is computed on the base of the distances of movement of the scanning member from the fixed position, e.g. the aforementioned read starting position, toward the home position resulting from the changes of the braking action applied to the scanning member.

The invention will be better understood from the following description taken in connection with the accompanying drawings in which:
- Fig. 1 and Fig. 2: are the serial flowsheets of the procedure for a scanning-member-stop positioning device according to an embodiment of the present invention;
- Fig. 3: is a flowsheet of the procedure for initializing said device;
- Fig. 4: is a block diagram of the signal circuit for said device being able to execute the procedure illustrated in Fig. 1, Fig. 2 and Fig. 3;
- Fig. 5: is a schematic view of the stop position of the scanning member as a function of the braking action; and
- Fig. 6: is a schematic vertical sectional view of a conventional copying machine as a background of the invention.

### DETAILED DESCRIPTION OF THE PREFERRED EMBODIMENT

A copying machine possessing a movable optical section is adopted in the following embodiment of the invention. In this case, the brake power is determined by controlling a motor driving the optical section.

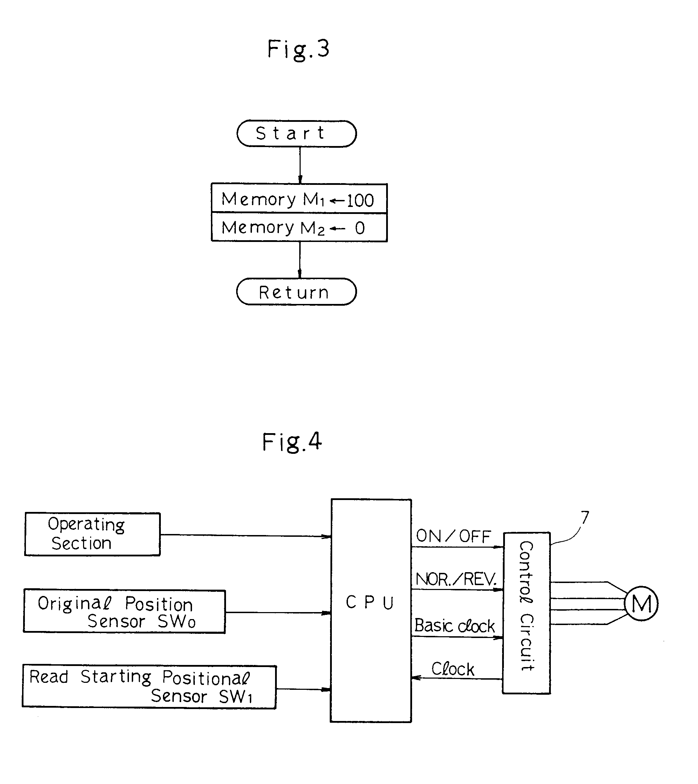

As shown in Fig. 4, the motor M driving the optical section 1 rotates under the influence of a control circuit 7. The signals of ON/OFF, of normal/inverted rotation, and of standard or basic clock (the clock driving the motor M at fixed speed) from a microprocessor CPU of a microcomputer are inputted into the control circuit 7. On the other hand, a clock signal corresponding to the speed of rotation of the motor M is inputted from the control circuit 7 into the CPU. Furthermore the signals from an operating section including operating keys, such as a print key, copy quantity keys, image density keys etc., from an original position sensor SW₀ detecting the arrival of the optical section 1 at its home position 1a, and from a read starting positional sensor SW₁ are inputted into the CPU. As to the install locations of the original position sensor SW₀ and of the read starting positional sensor SW₁, reference should be made to Fig. 6.

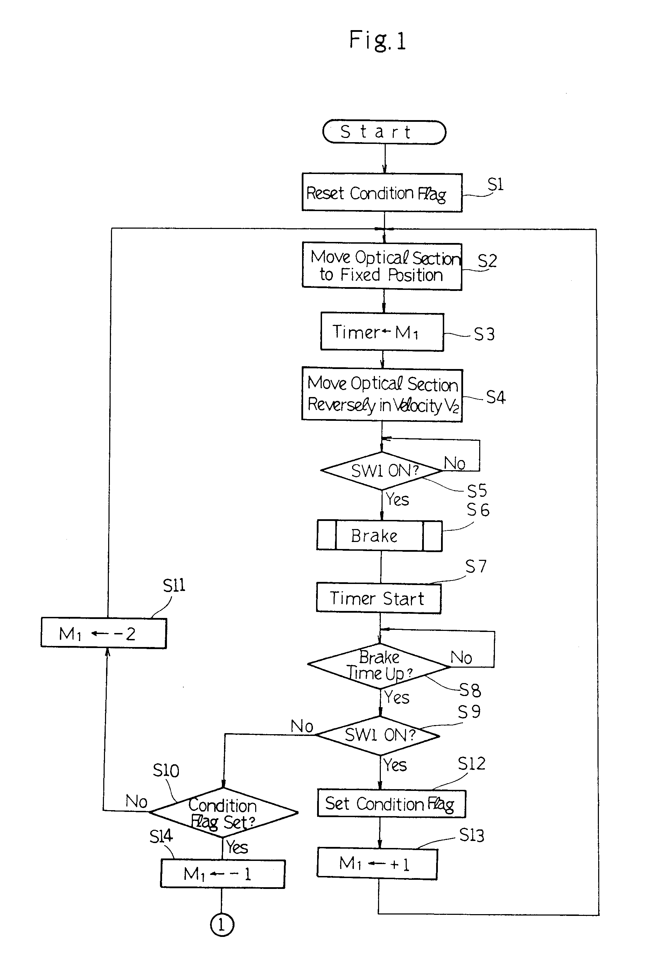

An embodiment of the present procedure will be explained by reference to Figs. 1 to 3 in which the steps S1, S2,... of the procedure are illustrated.

The scanning-member-stop positioning mode will be started at the time of turning on the power switch or, for example, a check switch in the copying machine A provided for a complete assembly examination and for adjusting some parts of the machine just delivered to users. On starting the above-described procedure, firstly, two memories M₁, M₂ are initialized as shown in Fig. 3.

Memory M₁ initially memorizes the data value of a count number, e.g. a value of 100, corresponding to a braking time a little larger than the estimated inverted rotation braking time. Memory M₂ initially is set up to the data value of a count number, e.g. a value of 0, corresponding to a value smaller than the suitable braking time. As shown in Fig. 1, a condition flag is reset at step S1 after the above initialization.

Next, the optical section 1 is moved to the appointed preliminary-run-start position in step S2. This preliminary-run-start position is on the right of the read starting position 1b in Fig. 6. The optical section 1, running back (going left in the drawing) toward the home position 1a from the preliminary-run-start position at an appointed velocity, secures the minimum preliminary-run range required so as to pass at the respective velocity at the read starting position 1b.

In Step S3 the preset value in memory M₁ is inputted into a timer when the optical section 1 reaches the preliminary-run-start position. At once, the optical section 1 starts moving in the reversed direction (running back) at a velocity V₂ in step S4. This velocity V₂ corresponds to the velocity obtained when the optical section 1 is braked at the read starting position 1b in the exposure scanning operation of ordinary use. The optical section 1 running at the velocity V₂ is usually braked at the home position 1a so as to be stopped there. In the procedure shown in this flowsheet, an actuating state of the optical section 1 from the read starting position 1b to the home position 1a reappears between the appointed preliminary-run-start position and the read starting position 1b, and an optimum degree of the brake power on the second braking actuation can be determined.

Accordingly the detect piece 1' provided in the optical section 1 running back at the velocity V₂, contacts the read starting positional sensor SW₁ soon after to turn it on (S5). At this time, the motor M starts rotating inversely for braking (S6), and the timer starts counting (S7). In step S8 the inverted rotation brake is released after the timer counts up to the count preset in step S3. The read starting positional sensor SW₁ is judged herein whether it turns on (S9).

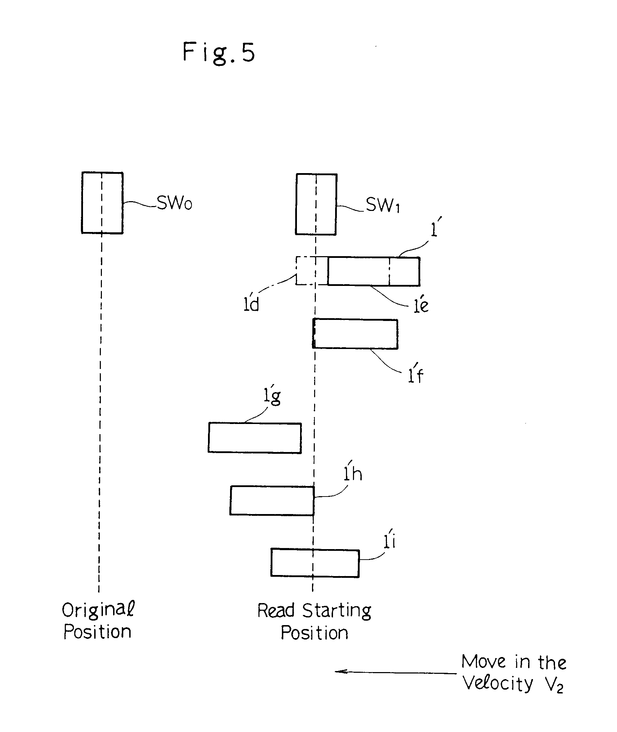

The foregoing states of the detect piece 1' are illustrated in Fig. 5. Braking of the optical section 1 is started by inverse rotation when the detect piece 1' provided in the optical section passes the read starting positonal sensor SW₁. Therefore, the detect piece 1' goes forth again to such a position as 1'e illustrated by a continuous line, owing to the inverted rotation braking to stop after reaching a position 1'd illustrated by a one-dot chain line.

As mentioned above, it may be observed that the detect piece 1' goes forth again over the read starting positional sensor SW₁, due to excessive inverted rotation braking, corresponding to the initialized value of memory M₁. Then the read starting positional sensor SW₁ should be judged to be in the OFF position in accordance with S9. That is to say, it should be recognized that a braking time corresponding to the initially fixed braking action is too long. So the optical section 1 must be actuated again with the braking time being shortened a litte. In other words, the data value of memory M₁ is decremented by 2 (S11) by way of the judging step (S10) about a condition flag. Then the process is returned to step S2.

The procedures of the steps processed between S2 and S9 are repeated as described above while the braking time is decremented at every repetition. The forth-going distance will decrease with the braking time being decremented stepwise. In the long run, the front end of the detect piece 1' shown at a position 1'f in Fig. 5 will pass slightly over the detection line (a detecting position), illustrated by the broken line, of the read starting positional sensor SW₁. The foregoing state is judged "Yes" in the step S9. The procedure is advanced to the step S12 on account of the judgement in step S9 being "Yes" under these conditions, and the condition flag is set up herein. Successively the procedures of the steps processed between S2 and S9 are repeated again after adding the value of 1 to the memory M₁ (S13). The adding process is made minutely to the value of memory M₁ much more with the object of a fine positioning of the optical section 1 than the rough subtracting one decreasing 2 in every step S11. Hence the greater decrement value can be set up in the step S11 on condition that the operating efficiency will be increased.

The detect piece 1' passes over the detect position of the read starting positional sensor SW₁ before long on account of the fine positioning in step S13, and the procedure from S2 to S9 is repeated no less than once, and the sensor SW₁ turns off. Under these conditions, the judgement in step S10 is shown "Yes", that is, the count number is overadded by 1. So in step S14 the value of 1 is subtracted from the value in memory M₁. As mentioned above, the count value is computed corresponding to the braking time required for the optical section 1 to be stopped at the position 1'f where the front end of the detect piece 1' passes slightly over the detecting position of said sensor SW₁, and is stored in memory M₁.

In the present embodiment, the procedure of adjusting the braking time will be explained, i.e. the braking time is adjusted for the optical section 1 to stop at the position where the center of its detect piece 1' conforms to the detecting position of the sensor SW₁, e.g. where its detect piece 1' is shown as 1'i in Fig. 5.

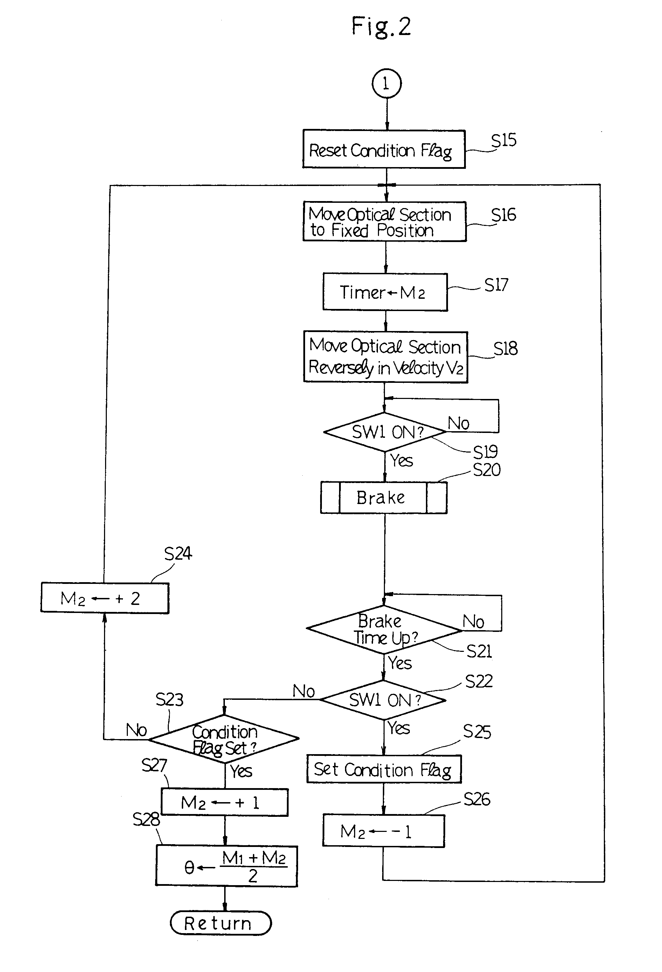

Accordingly, the braking time necessary to stop the detect piece 1' at the position 1'h is computed in the following procedure shown in Fig. 2, and the procedure which averages the value of said braking time and the value of the braking time stored in memory M₁, is made. In other words, the condition flag is reset to the initial state in step S15 after the process of step S14 is finished. Continuously, the optical section 1 is made to go forth to the preliminary-run-start position (S16) appointed above. Then the optical section 1 goes back at the appointed velocity V₂ (S18) after the value of memory M₂ is set to the timer (S17).

The inversely rotation braking of the optical section 1 ist started (S20) when its detect piece 1' passes over the detecting position of the read starting positional sensor SW₁ (S19). The braking continues for the appointed time set to the timer (S21).

Then the judgement as to the ON/OFF state of the read starting positional sensor SW₁ is made at the stop position (S22). The braking action should be too low at this time because the minimum value is initially set to the value of memory M₂ as described above. Consequently the detect piece 1' shown as 1'g in Fig. 5 is made to stop on its rear end passing over the detecting position of the sensor SW₁. As a result, the judgement in step S22 should be selected "No".

The condition flag is still in the reset state at step S23 as well as at step S15. Therefore the increment of the count value of 2 is added to the value of memory M₂. The procedure from step S16 to step S22 is executed again. The stop position of the optical section 1 goes forth stepwise as the braking time for inverse rotation of the motor M becomes longer as described above. The rear end of the detect piece 1' provided in the optical section by and by barely comes upon the detecting position of the read starting positional sensor SW₁. At this time, the step S22 selects the judgement of "Yes", the condition flag is set up (S25), the value of memory M₂ is decreased by 1(S26), and the procedure from the step S16 to step S22 is processed again. The rear end of the detect piece 1' detaches again from the detecting position of the sensor SW₁ by means of the above-stated procedure being repeated no less than once for a fine positioning. Further, the value of 1 is added again to the value of memory M₂ in step S27 after the step S22 judges "No".

Therefore the count value, corresponding to the braking time when the detect piece 1' is made to stop at the position shown as 1'h so that the rear end barely comes upon the detecting position of SW₁, is stored into memory M₁. The average of the values of both the memories M₁, M₂ is computed in the following step S28, and is stored into memory 0. Hereabout the procedures should finish after all. The braking time, based on the value of memory 0 and referring to the signal from the original position sensor SW₀, is given on the ordinary copy operation thereafter.

In the preferred embodiment mentioned above, the center of the detect piece 1' provided in the optical section 1 will be made to stop at the position where the center of the detect piece 1' will be conformed to the detecting position of the read starting positional sensor SW₁. In case of an arbitrary part of the detect piece 1' being made to stop at the detecting position of SW₁, as an other embodiment, a value obtained by dividing the added values of memories M₁ and M₂ in proportion to the optional ratio, may be adopted. The start timing of the braking action also may be controlled by the signal of an alternative switch instead of the read starting positional sensor SW₁.

The value of 100 or 0 is set to memory M₁ or M₂, respectively in the preferred embodiment. However, the proper values approximating the actual braking time can be selected in order to raise the efficiency by reduction of the repeating frequency. Further, the values extended properly can be initialized referring to the previous values in memories. In any case, a value is set to the memory M₁ or M₂, and the process of fine adjusting should be executed in steps S12 - S13, or S25 - S26. As a result, the optimum braking time can be calculated certainly, though a little more process time is spent. Though the stepwise subtractions are done from (or additions are done to) the value set in the memory M₁ as greater one (or set to memory M₂ as some smaller one) than an assumed braking time in the foregoing embodiment, the stepwise additions may be done little by little to some smaller value set to memory M₁ conversely, and the stepwise subtraction may be done from some greater value set to memory M₂ similarly.

In any case, the braking action on the scanning member running back toward the home position 1a at the appointed velocity, started at the timing of its passage over the appointed position, is changed. Further the suitable braking action is determined on the base of the moving distances of the scanning member resulting from changes of the applied braking action. Therefore the optimum braking action should be determined precisely in the actual stopping of the scanning member.

## Claims

1. A scanning member-stop positioning device for an image forming apparatus (A) wherein a document in contact with a document glass plate (2) is exposed due to the movement of a scanning member consisting of an optical section (1) or of the document glass plate (2), comprising:
means (M) for driving the scanning member (1 or 2) to run back toward a home position (1a) at a fixed velocity;
means for braking the scanning member (1 or 2) during its return movement, wherein braking begins at the time of the scanning member passing over a fixed position (1b);
**characterized by**
means (CPU, 7) for changing the braking action, defined as braking time and/or braking torque, applied by said braking means; and
means (CPU, SW1, M1, M2) for determining the braking action adapted to bring the scanning member (1 or 2) to a stop at said home position (1a), based on the distances of movement of the scanning member from said fixed position (1b) toward said home position (1a) resulting from the changes of the braking action applied to the scanning member (1 or 2), said changes being due to said means for changing the braking action.

2. A scanning member-stop positioning device as claimed in claim 1 wherein said braking action determining means (CPU, SW1, M1, M2) comprises first memory means (M1) for storing a first count indicative of a braking time adapted to bring the scanning member (1 or 2) to a stop at a predetermined distance in front of said home position (1a), second memory means (M2) for storing a second count indicative of a braking time adapted to bring the scanning member to a stop at a predetermined distance beyond said home position (1a), and means (CPU) for computing the braking time to be used to stop the scanning member (1 or 2) at said home position (1a) on the base of the two counts stored in said first and second memory means (M1, M2).

3. A scanning member-stop positioning device as claimed in claim 2 wherein said computing means (CPU) are designed to compute the average value of said two counts.

## Patentansprüche

1. Positioniervorrichtung zum Anhalten eines Abtastelements für ein Bilderzeugungsgerät (A), bei dem ein mit einer Dokumenten-Glasplatte (2) in Kontakt stehendes Dokument aufgrund der Bewegung eines aus einer optischen Baugruppe (1) oder der Dokumenten-Glasplatte (2) bestehenden Abtastelements belichtet wird, mit:
einer Anordnung (M) zum Antreiben des Abtastelements (1 oder 2) derart, daß dieses mit einer festen Geschwindigkeit zurück in eine Ausgangsposition (1a) läuft;
einer Anordnung zum Bremsen des Abtastelements (1 oder 2) während seiner Rücklaufbewegung, wobei der Bremsvorgang beginnt, wenn das Abtastelement eine feste Position (1b) überläuft;
gekennzeichnet durch
eine Anordnung (CPU, 7) zum Ändern der als Bremsdauer und/oder Bremsdrehmoment definierten Bremswirkung, die von der Bremsanordnung aufgebracht wird; und
eine Anordnung (CPU, SW₁, M₁, M₂), die anhand der auf Änderungen der auf das Abtastelement (1 oder 2) aufgebrachten Bremswirkung beruhenden Bewegungsabstände des Abtastelements von der festen Position (1b) in Richtung auf die Ausgangsposition (1a) die Bremswirkung bestimmt, die geeignet ist, das Abtastelement (1 oder 2) in der Ausgangsposition (1a) zum Halt zu bringen, wobei die genannten Änderungen auf die Anordnung zum Ändern der Bremswirkung zurückzuführen sind.

2. Positioniervorrichtung zum Anhalten eines Abtastelements nach Anspruch 1, wobei die die Bremswirkung bestimmende Anordnung (CPU, SW₁, M₁, M₂) versehen ist mit einer ersten Speicheranordnung (M₁) zum Speichern eines ersten Zählwertes, der kennzeichnend für eine Bremsdauer ist, die geeignet ist, das Abtastelement (1 oder 2) in einem vorbestimmten Abstand vor der Ausgangsposition (1a) zum Halt zu bringen, einer zweiten Speicheranordnung (M₂) zum Speichern eines zweiten Zählwertes, der kennzeichnend für eine Bremsdauer ist, die geeignet ist, das Abtastelement in einem vorbestimmten Abstand jenseits der Ausgangsposition (1a) zum Halt zu bringen, und einer Anordnung (CPU), die anhand der beiden in der ersten und der zweiten Speicheranordnung (M₁, M₂) gespeicherten Zählwerte die Bremsdauer errechnet, die anzuwenden ist, um das Abtastelement (1 oder 2) in der Ausgangsposition (1a) zum Halt zu bringen.

3. Positioniervorrichtung zum Anhalten eines Abtastelements nach Anspruch 2, wobei die Rechenanordnung (CPU) so ausgelegt ist, daß sie den Mittelwert der beiden Zählwerte errechnet.

## Revendications

1. Dispositif de positionnement de l'arrêt d'un élément de balayage destiné à un appareil (A) de formation d'image dans lequel un document en contact avec une vitre porte-document (2) est exposé sous l'effet du déplacement d'un élément de balayage consistant en un groupe optique (1) ou en la vitre porte-document (2), comprenant :
un moyen (M) de commande dudit élément de balayage (1 ou 2) pour le faire retourner à une position de repos (1a) à une vitesse fixe,
un moyen de freinage de l'élément de balayage (1 ou 2) pendant son mouvement de retour, le freinage débutant à l'instant auquel l'élément de balayage passe sur une position fixe (1b), caractérisé par
des moyens (CPU, 7) destinés à modifier le mode de freinage défini comme étant le temps de freinage et/ou le couple de freinage exercé par ledit moyen de freinage et
des moyens (CPU, SW1, M1, M2) pour déterminer le mode de freinage qui convient à mettre l'élément de balayage (1 ou 2) à l'arrêt à ladite position de repos (1a) et qui est basé sur les distances de déplacement de l'élément de balayage de ladite position fixe (1b) vers ladite position de repos (1a) qui résulte des modifications du mode de freinage exercé sur ledit élément de balayage (1 ou 2), lesdites modifications étant produites par lesdits moyens de modification du mode de freinage.

2. Dispositif de positionnement de l'arrêt d'un élément de balayage selon la revendication 1, dans lequel lesdits moyens de détermination du mode de freinage (CPU, SW1, M1, M2) comprennent une première mémoire (M1) destinée à enregistrer un premier comptage représentant un temps de freinage qui convient à mettre l'élément de balayage (1 ou 2) à l'arrêt à une distance prédéterminée au-devant de ladite position de repos (1a), une seconde mémoire (M2) destinée à enregistrer un second comptage qui représente un temps de freinage qui convient à mettre l'élément de balayage à l'arrêt à une distance prédéterminée au-delà de ladite position de repos (1a), et des moyens (CPU) de calcul du temps de freinage devant être utilisé pour arrêter ledit élément de balayage (1 ou 2) à ladite position de repos (1a) en fonction des deux comptages enregistrés dans lesdites première et seconde mémoires (M1, M2).

3. Dispositif de positionnement de l'arrêt d'un élément de balayage selon la revendication 2, dans lequel lesdits moyens de calcul (CPU) sont conçus pour calculer la moyenne des deux comptages.
